# EUROPÄISCHE PATENTANMELDUNG

(11) **EP 3 115 941 A1**
(43) Veröffentlichungstag der Anmeldung: **11.01.2017**
(21) Anmeldenummer: 16177795.8
(22) Anmeldetag: 04.07.2016
(51) Int. Cl.: G06Q 10/04, G06Q 50/06

(54) **VERFAHREN ZUR ERMITTLUNG UND AUSGABE VON KOSTEN BEIM BETRIEB EINER ANLAGE ZUR ZENTRIFUGALEN AUFBEREITUNG VON ABWASSER ODER KLÄRSCHLAMM UND ANLAGE ZUR DURCHFÜHRUNG DES VERFAHRENS**

(30) Priorität: 10.07.2015 DE 102015111189
(71) Anmelder: GEA Mechanical Equipment GmbH, 59302 Oelde (DE)
(72) Erfinder: DAMBERG, Thorsten, 59302 Oelde (DE); HERRMANN, Tobias, 59302 Oelde (DE)
(74) Vertreter: Specht, Peter

(57) **Zusammenfassung**

Ein Verfahren zur Ermittlung und Ausgabe, insbesondere zur Ermittlung und Anzeige, von Betriebskosten, die beim Betrieb einer Anlage zur Aufbereitung von Abwasser oder Klärschlamm im Zentrifugalfeld einer Zentrifuge anfallen, bei welchem das Abwasser oder der Klärschlamm im Zentrifugalfeld der Zentrifuge in Wasser als Flüssigphase und Feststoff bzw. entwässerten Schlamm getrennt werden, weist die folgenden Schritte auf:
A) Bereitstellen von Verbräuche und/oder Entsorgungsmengen betreffenden Kostendaten (1) in einer Währungseinheit pro Größeneinheit;
B) Ermitteln und/oder Bereitstellen von Daten betreffend entweder Verbräuche (2) und Entsorgungsmengen (3) während eines laufenden momentanen Betriebs der Anlage, eines in der Vergangenheit liegenden Betriebs der Anlage oder während eines simulierten Betriebs der Anlage;
C) Kostenbilanzierung unter Einbeziehung der Kostendaten aus Schritt A) und der Daten aus Schritt B) automatisiert mit einem Rechenprogramm auf einer Recheneinheit (9) zur Ermittlung anfallender Einzel- und/oder Gesamtkosten, insbesondere pro Zeiteinheit und/oder pro Volumeneinheit des laufenden momentanen Betriebs der Anlage, eines in der Vergangenheit liegenden Betriebs der Anlage oder des simulierten Betriebs der Anlage; und
D) Ausgabe (8) der anfallenden Einzel- und/oder Gesamtkosten aus Schritt C), insbesondere pro Zeiteinheit und/oder pro Volumeneinheit, des laufenden momentanen Betriebs der Anlage, eines in der Vergangenheit liegenden Betriebs der Anlage oder des simulierten Betriebs der Anlage.

## Beschreibung

Die vorliegende Erfindung betrifft ein Verfahren nach dem Oberbegriff des Anspruchs 1 und eine entsprechende Anlage zur Durchführung des Verfahrens.

Im Bereich der Abwasser- oder Klärschlammaufbereitung ist es oftmals ein Ziel der zentrifugalen Verarbeitung, einen mehr oder weniger feuchten Schlamm derart zentrifugal zu entwässern, dass er sich für eine Entsorgung auf einer Deponie eignet. Hierzu ist es bekannt, dem Abwasser oder Klärschlamm Mittel, insbesondere Flockungsmittel, oder andere Hilfsstoffe zuzusetzen, um eine weniger wässrige Feststoff- bzw. Schlammphase zu erhalten. Dabei ist es wünschenswert, die Betriebskosten der Anlage bzw. des Verfahrens so niedrig wie möglich zu halten. Da z.B. der Zusatz von Hilfsstoffen Kosten verursacht, ist es wünschenswert, den Einsatz dieser Hilfsstoffe möglichst kosteneffizient zu gestalten. Zudem ist es auch wünschenswert, die Energiekosten bei der zentrifugalen Verarbeitung zu senken.

Aus dem Stand der Technik sind Überwachungssysteme für Zentrifugen bekannt, welche die Betriebsparameter eines Verarbeitungsprozesses der Zentrifuge steuern und regeln. Diese Überwachung dient in der Regel dazu, den Prozess vorgabengemäß zu regeln, um bestimmte Produktvorgaben zu erreichen, beispielsweise, um die Trenneffizienz und/oder die Produktqualität auf einem vorgegebenen Niveau zu halten. Die bei der zentrifugalen Verarbeitung eines Mediums anfallenden Betriebskosten werden zumeist vor einer Verarbeitung oder nach einer Verarbeitung, ggf. mit Hilfe von geeigneten Tabellenkalkulationsprogrammen, berechnet.

Die Erfindung hat die Aufgabe, diesen Stand der Technik zu verbessern, um den laufenden Prozess bzw. das Verfahren besser überwachen zu können und/oder um einfacher am laufenden Prozess Veränderungen vornehmen zu können.

Die Erfindung löst diese Aufgabe durch den Gegenstand des Anspruchs 1 und schafft die Anlage des Anspruchs 15. Vorteilhafte Ausgestaltungen der Erfindung sind den Unteransprüchen zu entnehmen.

Anspruch 1 schafft ein Verfahren zur Ermittlung und Ausgabe, insbesondere zur Ermittlung und Anzeige, von Betriebskosten, die beim Betrieb einer Anlage zur Aufbereitung von Abwasser oder Klärschlamm im Zentrifugalfeld einer Zentrifuge anfallen, bei welchem das Abwasser oder der Klärschlamm im Zentrifugalfeld der Zentrifuge in Wasser als Flüssigphase und Feststoff bzw. entwässerten Schlamm getrennt werden, aufweisend wenigstens folgende Schritte:
A) Bereitstellen von Verbräuche und/oder Entsorgungsmengen betreffenden Kostendaten in einer Währungseinheit pro Größeneinheit;
B) Ermitteln und/oder Bereitstellen von Daten betreffend entweder Verbräuche und Entsorgungsmengen eines laufenden momentanen Betriebs der Anlage, eines in der Vergangenheit liegenden Betriebs der Anlage oder während eines simulierten Betriebs der Anlage;
C) Kostenbilanzierung unter Einbeziehung der Kostendaten aus Schritt A) und der Daten aus Schritt B) automatisiert mit einem Rechenprogramm auf einer Recheneinheit (9) zur Ermittlung anfallender Einzel- und/oder Gesamtkosten, insbesondere pro Zeiteinheit und/oder pro Volumeneinheit des laufenden momentanen Betriebs der Anlage, eines in der Vergangenheit liegenden Betriebs der Anlage oder des simulierten Betriebs der Anlage; und
D) Ausgabe der anfallenden Einzel- und/oder Gesamtkosten aus Schritt C), insbesondere pro Zeiteinheit und/oder pro Volumeneinheit, des laufenden momentanen Betriebs der Anlage, eines in der Vergangenheit liegenden Betriebs der Anlage oder des simulierten Betriebs der Anlage.

Vorzugsweise und besonders vorteilhaft werden die Schritte B), C) und D) zur Simulation des zukünftigen Betriebs während eines laufenden Betriebs der Anlage durchgeführt werden, um während des laufenden Betriebs eine Auswirkung von Datenänderungen in den Schritten A) und/oder B) zu simulieren. In diesem Fall umfasst Schritt B) vorzugsweise ein Eingeben von Daten wenigstens eines oder mehrerer vorzugsweise gegenüber einem aktuellen Betrieb geänderten Verbrauchswerts/Verbrauchswerte und/oder einer oder mehreren geänderten Entsorgungsmenge(n) und die Parameterbilanzierung gemäß Schritt C) eine Kostenbilanzierung unter Einbeziehen des geänderten Verbrauchs oder der geänderten Verbräuche und/oder der geänderten Entsorgungsmenge(n) während des simulierten Betriebs

Die Erfindung ermöglicht es derart nach einer Variante einerseits, die Prozesskosten im laufenden Betrieb fortwährend zu überwachen. Die Erfindung erlaubt es aber nach einer Weiterbildung insbesondere auch - oder alternativ - sich infolge der Vornahme von etwaigen Daten- und Parameteränderungen des Verarbeitungsprozesses ergebende Kostenveränderungen zu simulieren, somit vorherzusagen und auszugeben.

Dazu umfasst nach der ersten Variante die Parameterbilanzierung im Schritt B) ein Ermitteln und/oder Bereitstellen von Daten betreffend aktuelle Verbräuche und aktuelle Entsorgungsmengen während eines laufenden Betriebs.

Nach der Weiterbildung oder Alternative umfasst dagegen die Parameterbilanzierung im Schritt B) ein Ermitteln und/oder Bereitstellen von Daten betreffend simulierte Verbräuche und simulierte Entsorgungsmengen während eines simulierten Betriebs.

Derart wird es insbesondere auch möglich, im Vorfeld von Veränderungen eines oder mehrerer Betriebsparameter(n) des Verarbeitungsprozesses das Resultat dieser Veränderungen zu simulieren, was es dem Anwender ermöglicht, nur sinnvolle Parameterveränderungen durchzuführen. Ob Parameterveränderungen sinnvoll sind, erschließt sich aus der jeweiligen Vorgabe, mit welcher die Parameterveränderungen durchgeführt werden sollen. Ist es beispielsweise die Vorgabe bzw. das Ziel, die Betriebskosten (pro Zeiteinheit und/oder pro Volumeneinheit) bei einer Beibehaltung anderer Prozessparameter zu senken, sind nur solche Parameterveränderungen sinnvoll, welche dies ermöglichen Gerade eine Simulation während eines laufenden Betriebs ist daher besonders vorteilhaft und hilfreich beim Betrieb der Zentrifuge/Anlage.

Dabei sind die Betriebskosten nicht nur die Kosten, die momentan bei der Durchführung der zentrifugalen Verarbeitung anfallen sondern auch daraus resultierende Folgekosten, so beispielsweise die Deponiekosten einer Deponie für die zu entsorgende Schlamm- bzw. Feststoffphase.

So kann beispielsweise nach einer Bestimmung der laufenden Betriebskosten überlegt werden, bei einem zentrifugalen Trennvorgang zur Aufbereitung eines Abwassers oder Klärschlamms, bei dem die Zugabe von Flockungsmitteln an sich sinnvoll ist, die Menge des zugegebenen Flockungsmittels zu verändern. Erfindungsgemäß wird daher simuliert, welche Betriebs- und Folgekosten sich bei einer Erhöhung oder Verringerung der Menge an zugegebenem Flockungsmittel pro m³ zu verarbeitendem Medium ergeben. Denn es wird derart zwar die Menge an zugegebenem Flockungsmittel pro m³ zu verarbeitendem Medium gesenkt. Andererseits steigt derart aber der Restfeuchtegehalt in einem zu entsorgendem Feststoff an, was zu höheren Deponie- bzw. Entsorgungskosten führt. Anhand der Betriebskostensimulation, die während des Betriebs der Zentrifuge durchgeführt wird, ist es dem Bediener möglich, die Konsequenzen dieser oder anderer Parameterveränderung(en) zu kalkulieren, ohne diese Veränderung direkt auch im Betrieb der Zentrifuge testen zu müssen, Lediglich dann, wenn die Parameteränderung zu einer Betriebskostensenkung führt, wird sie auch testweise erprobt.

Das Ausführen des Verfahrens während des Betriebs der Anlage kann besonders bevorzugt derart erfolgen, dass aktuelle Verbrauchsdaten und Entsorgungsmengendaten während des Betriebes - beispielsweise sensorisch - ermittelt werden, so dass eine kostenoptimierte Anpassung des Betriebs der Anlage während des Verarbeitungsprozesses des Mediums erfolgen kann.

Das Ausführen des Verfahrens zur Simulation eines geänderten Betriebs der Anlage kann besonders bevorzugt durch ein Zurückgreifen auf aktuelle Daten und ergänzend anhand einer Simulation anhand der eingegebenen gegenüber dem aktuellen Betrieb geänderten Ausgangswerte mit Hilfe eines oder mehrerer mathematischphysikalischer Modelle (der Anlage, insbesondere der Zentrifuge) erfolgen, welche besonders bevorzugt auf die jeweilige Bauform der Anlage und deren Zentrifuge optimiert wurden. Die Daten des simulierten Betriebs können aber auch einer Datenbank entnommen werden, in der für verschiedenste Datenkombinationen Erfahrungswerte und/oder Messwerte aus früheren Betrieben gespeichert sind. So ist es denkbar, diese Datenbank nach und nach aufzubauen, indem jeweils bei einem laufenden Betrieb die momentanen Werte der Schritte A), B) und C) gespeichert werden.

Zu den einzelnen Schritten des Anspruchs 1 ist ergänzend folgendes auszuführen.

Schritt A): Die Währungseinheit kann eine beliebige Währungseinheit wie beispielsweise "Euro" oder "US-Dollar" sein. In einer bevorzugten Variante der Erfindung kann zwischen den Währungen gewechselt werden. Als physikalische Größeneinheit der Verbräuche ist zumeist eine Volumeneinheit oder eine Masseneinheit einzugeben bzw. verwendet, beispielsweise "I" oder "kg". Die Größeneinheit kann jedoch auch eine andere sein, beispielsweise in Hinsicht auf die verbrauchte elektrische Energie die Einheit "Kilowattstunde" bzw. "kWh".

Schritt B): Dieser Schritt muss nicht zwingend nach dem Schritt A erfolgen. Er kann auch alternativ gleichzeitig oder vor dem Schritt A erfolgen. Verbräuche und Abfallprodukte können entweder während des Betriebs durch Sensierung oder andere Messungen erfasst werden oder bereits vor dem Betrieb durch Simulation anhand von Eingabedaten berechnet werden.

Schritt C): Die Kostenbilanzierung ermöglicht vorzugsweise eine Ermittlung und dann ggf. Ausgabe von Kosten/h für die jeweiligen Positionen der Einzelverbräuche, der entstehenden Abfallprodukte und/oder der Gesamtkosten. So kann es z.B. sein, dass ein Wert als anfallende Deponiekosten pro Stunde Betriebslaufzeit unter den gegebenen Bedingungen bzw. Betriebsparametern ausgegeben wird.

Schritt D): Die Ausgabe, insbesondere Anzeige, kann auf vielfältige Weise erfolgen. Beispielsweise kann an einem Bildschirm durch eine einfache Farbkodierung (rot, gelb, grün) angezeigt werden, ob sich eine Einzelposition, z.B. der Verbrauch an Hilfsstoffen, in einem kostenoptimierten Bereich befindet oder nicht. In diesem Fall kann der Nutzer aufgrund der Farbkodierung in etwa einschätzen, in welchem Bereich sich die anfallenden Kosten derzeit befinden.

Es können beispielsweise auch konkrete Zahlenwerte oder Trendkurven über einen Zeitverlauf hinweg angezeigt werden.

Insgesamt ermöglicht das Verfahren den kostenoptimierten Betrieb einer Anlage zur zentrifugalen Aufarbeitung eines Abwassers oder eines Klärschlamms, insbesondere mit Hilfe wenigstens eines Dekanters und/oder wenigstens eines Separators, sowie eine kostenoptimierte Anpassung der Betriebsweise der Anlage im Betrieb.

Wie bereits weiter oben erläutert, kann auch eine Simulation eines zukünftigen geänderten Betriebs während eines aktuell laufenden Betriebs erfolgen.

So kann beispielsweise weise simuliert werden, wie sich die anfallenden Kosten bei einer Änderung des Zulaufvolumens an Abwasser oder Klärschlamm in die Anlage ändern. Beispielsweise kann auch eine Simulation einer Veränderung der Verfahrenskosten durch eine Änderung des Betriebszeitraums erfolgen. Denn Energiekosten, insbesondere Stromkosten, sind beispielsweise in der Nacht oftmals günstiger sind als am Tage, so dass sich durch eine Änderung des Betriebszeitraums auch eine Veränderung der Stromkosten ergibt. Die Vorabsimulation oder die Simulation im Betrieb der Anlage kann z.B. den Strombedarf und den Bedarf an Hilfsmitteln umfassen. Sie erlaubt dem Betreiber der Anlage eine genauere Abschätzung der Kosten, was z.B. eine bessere Beratung des Kunden ermöglicht.

Vorteilhafte Ausgestaltungen der Erfindung sind Gegenstand der Unteransprüche.

Die bereitgestellten Daten gemäß Schritt A umfassen vorteilhaft zumindest folgende Daten:
i) Kosten pro Masse- oder Volumeneinheit an ggf. zugesetzten Hilfsstoffen,
ii) Kosten pro Masse- oder Volumeneinheit an entstehenden Entsorgungskosten (Abfallprodukt),
iii) Kosten pro Masse- oder Volumeneinheit an Lösungs- und/oder Verdünnungsmittel,
iv) Energiekosten pro Zeiteinheit und/oder pro Volumeneinheit, und/oder
v) Verschleißkosten pro Zeiteinheit und/oder pro Volumeneinheit.

Ggf. ist ein zu berücksichtigender Faktor bei der Kostenermittlung und der daraus resultierenden Optimierung des Prozesses der Kostenaufwand für den Einsatz eines bei der zentrifugalen Verarbeitung zugesetzten Hilfsstoffes. Derartige Hilfsstoffe - z.B. Polymere - werden zwar nicht bei jeder zentrifugalen Verarbeitung benötigt, sind aber, soweit eingesetzt, bei der Kostenbilanzierung zu berücksichtigen. Analog sind Lösungsmittel oder dgl. zu betrachten. Sofern diese eingesetzt werden, sollten die entsprechenden Kosten einbezogen werden.

In Hinsicht auf den Energieverbrauch sind insbesondere Stromkosten zu berücksichtigen.

Das Ermitteln von Verbräuchen und/oder das Ermitteln von anfallenden Entsorgungsmengen gemäß Schritt B umfasst zumindest das Ermitteln der aktuellen Verbräuche/Mengen der unter A berücksichtigten Parameter.

Parameter i: Die Hilfsmittel können beispielsweise Polymerverbindungen sein, welche eine bessere Fällung von Feststoffen ermöglichen, sofern das zu bearbeitende Medium Feststoffe enthält. Hilfsstoffe können auch Kalk oder auch Flüssigkeiten umfassen. Der Umfang, also die Masse oder das Volumen an zugesetzten Hilfsmitteln können im Fall eines Fluid durch Durchflussmessung erfolgen. Der Umfang an zugesetzten Feststoffen kann aber auch z.B. durch Ermittlung eines Füllstandes bestimmt werden. Eine analoge Messtechnik kann für die Ermittlung des Verbrauchs an Kühlmittel und/oder Verdünnungsmittel und/oder für die Ermittlung des Umfangs an anfallenden Entsorgungsmengen eingesetzt werden.

Parameter ii: Entsorgungskosten können Abfallprodukte wie beispielsweise Feststoffe, Schlämme oder Flüssigkeiten sein.

Parameter iii: Insbesondere der Antrieb der Trommel der Zentrifuge verbraucht Energie. Der Antrieb kann einen Primärantrieb und einen Sekundärantrieb für eine rotierende Trommel umfassen, wobei zur Ermittlung der Energiekosten dann der summierte Energieverbrauch des Primär- und des Sekundärantriebs genutzt wird. In Hinsicht auf den Parameter "Energieverbrauch" sollen jedenfalls die Stromkosten für diesen Antrieb berücksichtigt werden. Einzubeziehen sind vorzugsweise ferner die Kosten von der Zentrifuge zuzuordnenden Aggregaten wie Pumpen und/oder weiterer elektrischer Einrichtungen.

Parameter iv: Je nach Lösungs- oder Verdünnungsmittelpreis kann dieser Verbrauch einen mehr oder weniger hohen Anteil an den Gesamtkosten haben. Zumeist handelt es sich um Wasser, es kann allerdings auch Öl sein.

Parameter v: Die Betriebsdauer der Anlage ist vorwiegend für die Ermittlung des Verschleißes relevant. Dabei kann auch eine Einzelteilbilanzierung erfolgen, da unterschiedliche Elemente der Anlage unterschiedliche durchschnittliche Ausfall- und Verschleißraten haben. Hierbei kann auf Erfahrungswerte zurückgegriffen werden.

Es ist von Vorteil, wenn das Ermitteln von Verbräuche und/oder Ermitteln von anfallenden Entsorgungsmengen gemäß Schritt B) anhand einer messtechnischen Erfassung von Messwerten wie Drehmomenten, Durchflüssen und/oder Dosiervolumen in einem Zeitintervall im Betrieb der Anlage erfolgt und wenn darauf basierend anschließend eine Berechnung der Verbräuche und der Masse oder des Volumens an anfallenden Entsorgungsmengen erfolgt.

Es ist aber auch von Vorteil, wenn das Ermitteln von Verbräuchen und/oder Ermitteln von anfallenden Entsorgungsmengen gemäß Schritt B anhand einer Simulation durch ein Computerprogramm anhand eines mathematisch-physikalischen Modells erfolgt.

Vorteilhaft können an einer Ausgabeeinheit wie einem Display des Computers bzw. der Recheneinheit vorzugsweise wenigstens zwei oder mehrere der folgenden Daten angezeigt werden:
N1 Entsorgungskosten,
N2 Kosten für eingesetzte Hilfsstoffe,
N3 Kosten für das eingesetzte Betriebswasser,
N4 Stromkosten,
N5 weitere Betriebskosten (Personalkosten oder ähnliches) und/oder
N6 Gesamtkosten.

Vorzugsweise weist die Anlage bzw. deren Recheneinheit eine Auswerteeinheit (ein Computerprogramm) auf, das auch als Betriebskostenrechner bezeichnet wird. Für ermittelte Einzelbetriebskosten, umfassend die Entsorgungskosten und/oder Kosten für eingesetzte Hilfsstoffe und/oder Kosten für eingesetztes Betriebswasser und/oder Betriebsmittel (Schmierstoffe und dgl.) und/oder Stromkosten, sind in einer Datenbank die Werte der Schritte A) und B) und vorzugsweise Sollwerte eingegeben bzw. hinterlegt. Die Auswerteeinheit kann die ermittelten Einzelbetriebskosten mit den Sollwerten abgleichen und ggf. Warnungen ausgeben und/oder Vorschläge für einen geänderten Betrieb unterbreiten, der die Betriebskosten unterhalb der Sollwerte senken würde.

Nachfolgend wird die Erfindung anhand eines konkreten Ausführungsbeispiels und unter Zuhilfenahme der beigefügten Figuren näher erläutert. Es zeigt:
- Fig. 1: eine schematische Darstellung einer erfindungsgemäßen Anlage
- Fig. 2: ein Flussdiagramm, welches beispielhaft einen Ablauf einer erfindungsgemäßen Verfahrensvariante veranschaulicht.

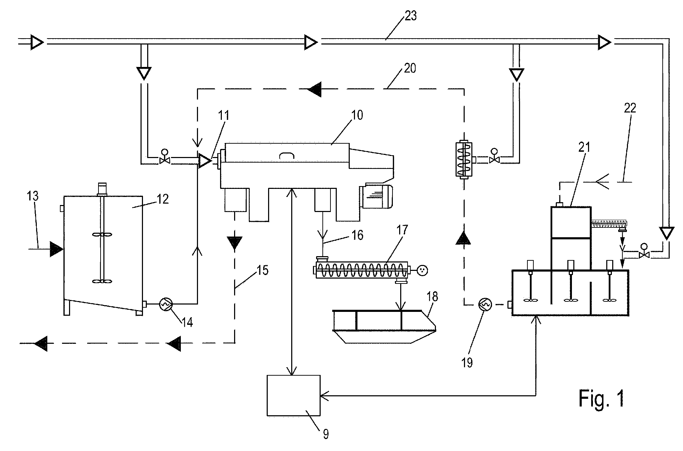

Fig. 1 zeigt eine Zentrifuge, die als Dekanter 10 ausgelegt ist. Diesem Dekanter wird durch einen Zulauf 11 ein zu entwässernder Schlamm (aus einem Behälter 12 mit einer Zuleitung 13 mittels einer Pumpe 14 zugeleitet.

In dem Dekanter 10 wird der Schlamm entwässert. Aus dem Dekanter 10 werden daher einerseits durch eine erste Ableitung 15 Wasser als Flüssigphase und andererseits durch eine zweite Ableitung 16 Feststoff bzw. entwässerter Schlamm abgeleitet, hier über einen Schneckenförderer 17 in einen Container 18. Der entwässerte Schlamm wird - wenn sein Trockengehalt entsprechend etwaiger geltender Vorschriften hoch genug ist - auf eine Deponie gebracht.

Um einen genügend hohen Trockengehalt des zentrifugal entwässerten Schlammes zu erreichen, ist es bekannt, dem zu entwässernden Schlamm vor der Verarbeitung im Zentrifugalfeld Hilfsstoffe zuzusetzen, die das Entwässern des Schlammes im Zentrifugalfeld erleichtern. In den Zulauf 11 des Dekanters kann daher vorzugsweise - hier durch eine Leitung 20 - ein Flockungsmittel gegeben werden. Vorzugsweise erfolgt dies mit einer Dosierpumpe 19. Der Dosierpumpe 19 kann eine Flockungsmittelaufbereitungseinrichtung 21 vorgeschaltet sein, der das Flockungsmittel durch eine Flockungsmittelzuleitung 22 zugeleitet wird.

Eine Wasserzuleitung 23 ermöglicht es, im Prozess an einer oder verschiedenen Stellen Wasser zuzugeben, und zwar hier einerseits in den Zulauf 11 (um ggf. den Wassergehalt des Schlammes vor der Zentrifugalverarbeitung zu erhöhen) und/oder in die Leitung 20 für das Flockungsmittel oder in die Flockungsmittelaufbereitungseinrichtung 21.

Gesteuert wird der Betrieb der Anlage von einer Recheneinheit 9. Auf dieser ist ein Programm gespeichert und ausführbar, mit dem ein Verfahren nach einem der Ansprüche 1 bis 14 ausführbar ist.

Insgesamt bildet damit die Anlage der Fig. 1 eine beispielhafte Anlage zur Durchführung des Verfahrens nach einem der Ansprüche 1 bis 14.

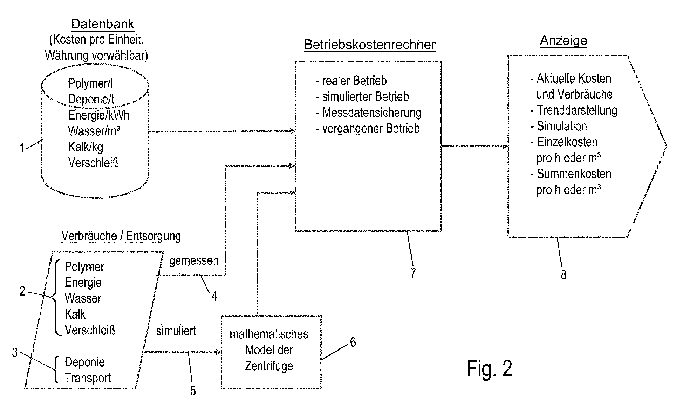

Fig. 2 zeigt einen schematischen Ablauf eines Verfahrens zur Anzeige von entstehenden Kosten, die beim Betrieb einer Anlage zur Aufbereitung von Abwasser oder Klärschlamm im Zentrifugalfeld der Zentrifuge anfallen. Diese Kosten können sich in Abhängigkeit von der Betriebsweise der Anlage ändern.

Die Recheneinheit weist eine Speichereinheit (Datenbank 1) auf oder kann jedenfalls auf eine solche zugreifen. In der Speichereinheit ist ein Datensatz oder sind mehrere Datensätze mit Daten eingebbar bzw. hinterlegt. Dieser Datensatz oder diese Datensätze kann Betriebsparameter der Zentrifuge und mediumsspezifische Daten (z.B. der Feuchtegehalt eines Klärschlamms) umfassen. Die bei der zentrifugalen Verarbeitung anfallenden Kosten sind spezifiziert und ändern sich durch Änderung der Betriebsparameter oder der mediumsspezifischen Daten.

So können die Betriebskosten je nach Umfang und Art an zugesetzten Hilfsstoffen variieren, z.B. Kalk, Entschäumungsmittel, Fällungszusätze, Phasenvermittler, Komplexierungsmittel, Antioxidantien, usw.).

Ebenso kann eine Verdünnung mit einem bestimmten Verdünnungsfaktorbereich zur zentrifugalen Trennung erforderlich sein, um eine effiziente zentrifugale Verarbeitung zu ermöglichen. Der Anteil an Verdünnungsmittel ist in diesem Fall ebenfalls in den Betriebskosten zu berücksichtigen.

Bei einer zentrifugalen Trennung fallen oftmals zu entsorgende Substanzen, z.B. Feststoffe, feststoffhaltige Schlämme, ölhaltige Wasserphasen, usw. an. Diese müssen zumeist kostenintensiv entsorgt werden. Die Entsorgungskosten sind daher bei einer entsprechenden Kostendarstellung zu berücksichtigen.

In einem ersten Verfahrensschritt A erfolgt ein Bereitstellen von Daten in der Datenbank 1. Die Speichereinheit umfasst eine Datenbank mit einem Datensatz oder mehrere Datensätze welche die Kosten pro Einheit für eine und/oder mehrere der nachfolgenden Daten nachweisen
- Zugesetzte Hilfsstoffe in Euro/Liter
- Entsorgungskosten in Euro/Tonne (festes oder flüssiges Abfallprodukt), z.B. Deponiekosten
- Energie in Euro/kWh
- Lösungs- und/oder Verdünnungsmittel in Euro/m³
- Verschleiß Euro/Betriebsdauer

Die Datensätze können in eine andere Währung, z.B. US-Dollar, umgerechnet werden. Die Datensätze können aktualisiert werden, um eine möglichst aktuelle Kostenabschätzung zu erlauben. Das Bereitstellen dieser Daten und Datensätze erfolgt in einem ersten Verfahrensschritt.

In einem zweiten Verfahrensschritt B erfolgt ein Ermitteln von Verbräuchen 2 und/oder von anfallenden Entsorgungsmengen 3. Dies umfasst die Ermittlung einer und/oder mehrerer der folgenden Daten:
- Hilfsmittelverbrauch bei der zentrifugalen Verarbeitung
- Umfang des gebildeten zu entsorgenden Abfallprodukts
- Energieverbrauch während der zentrifugalen Verarbeitung
- Verbrauch an Lösungs- und/oder Verdünnungsmittel
- Betriebsdauer der Anlage

Diese Daten können während des Betriebs der Zentrifuge ermittelt werden oder alternativ vor der Inbetriebnahme durch Vorgabe von Eingabewerten und Simulation 5 ermittelt werden. Bei der ersten der beiden vorgenannten Varianten kann das Ermitteln besonders bevorzugt durch messtechnische Erfassung 4 von Messwerten wie Drehmomenten, Durchflüssen und/oder Dosiervolumen in einem Zeitintervall und anschließende Berechnung ermittelt werden.

Der Betrieb einer Anlage zur zentrifugalen Trennung kann vorzugsweise durch Anwendung eines mathematisch-physikalischen Modells 6 simuliert werden. Anhand eines Rechenprogramms - nachfolgend auch Betriebskostenrechner 7 genannt- wird sodann eine Kostenbilanzierung C der aktuellen oder simulierten Einzelverbräuche erstellt.

Anschließend erfolgt die Ausgabe - hier eine Anzeige 8 - des Ergebnisses der Kostenbilanzierung als Einzelkostenauflistung pro Zeitintervall, als Gesamtkostenauflistung pro Zeitintervall und/oder Volumenintervall und/oder als Trenddarstellung über ein Zeitintervall und/oder Volumenintervall hinweg.

Nachfolgend soll einige weitere Optionen des erfindungsgemäßen Verfahrens näher erläutert werden.

Hilfsmittel, welche den Entwässerungsvorgang während der zentrifugalen Entwässerung verbessern, sind z.B. Polymerverbindungen, welche vorzugsweise als Granulat oder als flüssiges Konzentrat zugegeben werden können. Je nach Applikation kann das Hilfsmittel oder können die Hilfsmittel unterschiedlich dosiert sein. Oftmals beträgt der Wirkstoff-Massenanteil bei Zugabe als Granulat mehr als 95% und bei Zugabe als flüssiges Konzentrat zumeist weniger als 60%. Je Applikationsform, also flüssig oder fest oder die Wirkstoffkonzentration ist daher durch den Nutzer vorzugeben, so dass die Auswerteeinheit des Rechners bzw. des Rechenprogramms den Verbrauch an Wirkstoff berechnen kann. Durch eine Messung der Zuführmenge an Hilfsstoffen, z.B. durch Füllstand im Lagertank oder durch Durchflussmessung, kann der aktuelle Hilfsmittelverbrauch ermittelt werden.

Weitere Daten können seitens des Nutzers eingegeben werden oder messtechnisch erfasst und bereitgestellt werden. Diese werden im Rahmen der vorliegenden Erfindung als Eingabewerte bezeichnet. Die Eingabewerte sind optional und hängen u.a. vom Prozess ab. Dazu gehören:
I der Produktzulauf an Abwasser oder Klärschlamm (erfasst z.B. in m³/h)
II der Trockensubstanzgehalt (in % TS)
III die Dichte (erfasst z.B. in kg/dm³)
IV die Applikationsform des Hilfsstoffes (Granulat oder flüssiges Konzentrat)
V die Dosierung an Hilfsstoff (erfasst z.B. in kg/t TS)
VI der Gehalt an Wirkstoff im Hilfsstoff (in %)
   das Dosiervolumen an Hilfsstoff
VIII der Abscheidegrad (in %) und/oder
IX der Anteil an Trockensubstanz im Feststoffablauf (in Massen-%)

Der Produktzulauf I gibt z.B. das Volumen an Flüssigkeit, d.h. Abwasser oder Klärschlamm an, welche der Zentrifuge als zu trennendes Medium zugeführt wird.

Der Trockensubstanzgehalt II in % Trockensubstanz beschreibt, wie hoch der Feststoffgehalt des zugeführten Mediums im Produktzulauf ist.

Der Parameter IV beschreibt beispielsweise, ob es sich bei dem zugeführten Hilfsstoff um ein Granulat oder ein flüssiges Konzentrat handelt. Durch die Dosierung V in kg/t Trockensubstanz des Mediums kann angegeben werden, wieviel Hilfsstoff, z.B. Granulat, dem Medium zugegeben wurde. Es gibt Anwendungen, bei welchen der Gehalt an Wirkstoff im Hilfsstoff bereits festgelegt ist. So kann der Hilfsstoff auch gleichzeitig der Wirkstoff in reiner Form sein. In diesem Fall muss der Gehalt nicht vorgegeben oder ermittelt werden. In anderen Fällen ist dies jedoch notwendig. Dies gilt insbesondere bei flüssigen Konzentraten in denen der Wirkstoff zu unterschiedlichen Konzentrationen vorliegt. In diesem Fall kann der Gehalt VI an Wirkstoff im Hilfsstoff angegeben werden.

Der Hilfsstoff kann nach seiner Zugabe in einer Vormischkammer verdünnt werden. Soll diese Form der Zugabe gewählt werden, so ist das Verdünnungsvolumen VII zu berücksichtigen, mit welchem der Hilfsstoff verdünnt wurde. Der Abscheidegrad VIII in Volumen% gibt an, wieviel des zugeführten Feststoffes (des Mediums + Polymer) als abgetrennter Feststoff abgeführt wird bzw. gesammelt wird. Der Anteil an Trockensubstanz im Feststoffablauf IX gibt an wieviel Prozent Trockensubstanz im Feststoffablauf abgeführt werden soll.

Aus den vorgenannten bereitgestellten Werten kann/können sodann durch die Auswerteeinheit bzw. den Betriebskostenrechner 7 eine oder mehrere der folgenden Größen ermittelt werden (tatsächlicher Wert oder simulierter Wert):
a) Trockensubstanzanteil im Zulauf (in kg TS/h)
b) Gesamtzulauf (in m³/h)
c) Anteil an zugeführten Hilfsstoff (in kg/h) oder (in l/h bzw. m³/h)
d) Verdünnungswasser in m³/h
e) Hilfsstoffzulauf mit Verdünnungswasser in m³/h
f) Zentratablauf in m³/h
g) Zentratablauf Trockensubstanz (in kg TS/h)
h) Feststoffablaufmenge (in m³/h)
i) Feststoffablauf Trockensubstanz (in kg TS/h)

Der Trockensubstanzanteil a gibt an, wieviel Trockensubstanz im Zulauf pro Stunde zugeführt wird. Er errechnet sich aus der gesamten Produktzulaufmenge und der darin enthaltenen prozentualen Trockensubstanz. Der Gesamtzulauf b gibt an, wieviel Kubikmeter pro Stunde an zu bearbeitenden Abwasser/Klärschlamm der Anlage zugeführt wird.

Im Fall, dass der zugeführte Hilfsstoff ein Granulat ist, so kann der Anteil an zugeführtem Hilfsstoff in kg je Stunde angegeben werden. Im Falle eines flüssigen Konzentrats kann der Anteil des zugeführten Hilfsstoffs Polymer in Liter je Stunde oder Kubikmeter je Stunde ermittelt werden.

Bei der Ermittlung des Anteils an Verdünnungswasser können der Produktzulauf I, der Trockensubstanzgehalt II , die Dichte III, der Dosierung an Hilfsstoff V, dem Gehalt an Wirkstoff im Hilfsstoff VI und dem Verdünnungsvolumen VII berücksichtigt werden.

Der Polymerzulauf mit Verdünnungswasser kann aus dem Produktzulauf I, dem Trockensubstanzgehalt II, der Dichte III, der Dosierung an Hilfsstoff V und dem Verdünnungsvolumen des Hilfsstoffes, sofern eine Lösung vorliegt, ermittelt werden.

In die Ermittlung des Zentratablaufs f können der Produktzulauf I, der Trockensubstanzgehalt II, die Dichte III, die Dosierung an Hilfsstoff V, der Gehalt an Wirkstoff im Hilfsstoff VI, das Verdünnungsvolumen - Hilfsstoff VII, der Abscheidegrad VIII und der Anteil an Trockensubstanz im Feststoffablauf IX eingehen.

Bei der Ermittlung der Feststoffablaufmenge h können der Produktzulauf I, der Trockensubstanzgehalt II, der Abscheidegrad VIII und der Anteil an Trockensubstanz im Feststoffablauf IX berücksichtigt werden

Bei der Ermittlung des Feststoffablaufs i können der Produktzulauf I, der Trockensubstanzgehalt II, die Dichte III und der Abscheidegrad VIII berücksichtigt werden.

Die Auswerteeinheit bzw. der Betriebskostenrechner ermittelt sodann aufgrund von in der Datenbank hinterlegten oder bereitgestellten Anschließend können die ermittelten Materialkosten/Zeiteinheit und/oder Volumeneinheit ausgegeben werden. Dies betrifft insbesondere
N1 Entsorgungskosten (Euro/m³)
N2 Kosten der eingesetzten Hilfsstoffe (Euro/m³)
N3 Kosten des eingesetzten Betriebswassers (Euro/m³)
N4 Stromkosten (Euro/kWh)
N5 weitere Betriebskosten (Personalkosten oder ähnliches; EURO)
N6 Gesamtkosten (EURO)

Die Währungen sind umstellbar, z.B. von Euro nach US-Dollar, und können auf aktuelle Kursschwankungen eingestellt werden.

Die Gesamtkosten N6 ergeben sich aus der Summe der Kosten N1 bis N5 über die Zeit.

Dabei kann vorteilhaft auch eine Simulation eines zukünftigen geänderten Betriebs während eines aktuell laufenden Betriebs erfolgen.

Dazu werden die Kostenfaktoren N1 bis N5 beispielsweise einer Datenbank mit vorgespeicherten Tabellen über denkbare Kombinationen der Parameter N1 bis N5 entnommen. Diese Tabellen wurden vorzugweise in Versuchen ermittelt und abgespeichert. Denkbar ist es aber auch, funktionale Verknüpfungen zumindest zwischen den Parametern N1, N2, N3, N4 und/oder N5 im Versuch zu ermitteln und diese funktionalen Verknüpfungen bzw. Funktionen abzuspeichern und bei der Simulation zur Ermittlung der Kosten N1, N2, N3, N4, und/oder N5 zu verwenden. Nach einer Eingabe wenigstens eines geänderten Parameters wird sodann die Änderung der weiteren Parameter ermittelt. Diese Kosten werden sodann summiert. Daraufhin wird das Ergebnis ausgeben.

So kann beispielsweise weise simuliert werden, wie sich die anfallenden Kosten bei einer Änderung des Zulaufvolumens an Abwasser oder Klärschlamm in die Anlage ändern. Beispielsweise kann auch eine Simulation einer Veränderung der Verfahrenskosten durch eine Änderung des Betriebszeitraums erfolgen. Denn Energiekosten, insbesondere Stromkosten, sind beispielsweise in der Nacht oftmals günstiger sind als am Tage, so dass sich durch eine Änderung des Betriebszeitraums auch eine Veränderung der Stromkosten ergibt. Die Vorabsimulation oder die Simulation im Betrieb der Anlage kann z.B. den Strombedarf und den Bedarf an Hilfsmitteln umfassen. Sie erlaubt dem Betreiber der Anlage eine genauere Abschätzung der Kosten, was z.B. eine bessere Beratung des Kunden ermöglicht.

Die Kosten an eingesetztem Betriebswasser ergeben sich vorzugsweise aus dem ermittelten Anteil an Verdünnungswasser und dem Materialpreis M an eingesetztem Betriebswasser.

Die Kosten an eingesetzten Hilfsstoffen können sich aus mehreren Komponenten zusammensetzen, z.B. zugesetzten Polymeren zur besseren Feststoffabtrennung und zugesetztem Kalk.

Anschließend können die ermittelten Materialkosten/Zeiteinheit und/oder Volumeneinheit ausgegeben werden. Dies betrifft insbesondere die erwähnten Parameter N1 bis N6.

Die Kosten sind einzeln oder zusammen auf eine Zeiteinheit bezogen. Optional kann auch eine Angabe der Kosten pro angefallener Masse und/oder Volumen erfolgen.

Es ist zudem zur Überprüfung des optimalen Betriebs möglich, eine Trendkurve anzuzeigen, welche z.B. den Energieverbrauch während des Betriebes der Anlage auf einer Zeitkurve darstellt.

Der Nutzer kann frei wählen zwischen Betriebskosten pro Stunde, pro Kubikmeter Schlammzulauf oder pro Tonne Trockensubstanz im Zulauf.

Die aktuellen Verbrauchszahlen, z.B. Hilfsmittelverbrauch pro Tag, können in einer Datenbank hinterlegt werden und zur Bilanzierung addiert werden. Der Nutzer kann sodann einen Verbrauch über einen größeren Zeitraum abfragen, z.B. Hilfsmittelverbrauch pro Monat und/oder Jahr. Gleiches gilt für weitere Einzelparameter, z.B. den Energiekosten usw.

Weitere Angaben zur Betriebsdauer, zum Anfahren der Anlage, Spülen der Anlage und/oder dem Personaleinsatz können bei der Gesamtbilanzierung berücksichtigt werden.

Der aktuelle Verbrauch der einzelnen Betriebsparameter kann visuell auch einzeln angezeigt werden.

In einer Ausführungsvariante der Erfindung können in der Datenbank Parameterbereiche für Kosten und Verbrauch nach Zentrifugentyp und zu verarbeitendem Medium hinterlegt sein, welche beschreiben, wie eine Zentrifuge unter Kostengesichtspunkten optimal betrieben werden kann. In diesem Fall kann die Anzeige, ob die Zentrifuge aktuell in einem kostengünstigen Bereich betrieben wird, visuell erfolgen, z.B. durch eine farbliche Anzeige z.B. grün, gelb, rot, oder durch einen Bewertungsfaktor, z.B. 1-6.

### Bezugszeichenliste

- 1: Datenbank
- 2: Ermitteln von Verbräuchen
- 3: Ermitteln von zu entsorgenden Produkten
- 4: Erfassung/Messung
- 5: Simulation
- 6: Mathematisch-physikalisches Modell
- 7: Kostenbilanzierung
- 8: Anzeige
- 9: Recheneinheit 10 Dekanter
- 11: Zulauf
- 12: Behälter
- 13: Zuleitung
- 14: Pumpe
- 15: erste Ableitung
- 16: zweite Ableitung
- 17: Schneckenförderer
- 18: Container
- 19: Dosierpumpe
- 20: Leitung
- 21: Flockungsmittelaufbereitungseinrichtung
- 22: Flockungsmittelzuleitung
- 23: Wasserzuleitung

## Patentansprüche

1. Verfahren zur Ermittlung und Ausgabe, insbesondere zur Ermittlung und Anzeige, von Betriebskosten, die beim Betrieb einer Anlage zur Aufbereitung von Abwasser oder Klärschlamm im Zentrifugalfeld einer Zentrifuge anfallen, bei welchem das Abwasser oder der Klärschlamm im Zentrifugalfeld der Zentrifuge in Wasser als Flüssigphase und Feststoff bzw. entwässerten Schlamm getrennt werden, **gekennzeichnet durch** zumindest folgende Schritte:
A) Bereitstellen von Verbräuche und/oder Entsorgungsmengen betreffenden Kostendaten (1) in einer Währungseinheit pro Größeneinheit;
B) Ermitteln und/oder Bereitstellen von Daten betreffend entweder Verbräuche (2) und Entsorgungsmengen (3) während eines laufenden momentanen Betriebs der Anlage, eines in der Vergangenheit liegenden Betriebs der Anlage oder während eines simulierten Betriebs der Anlage;
C) Kostenbilanzierung unter Einbeziehung der Kostendaten aus Schritt A) und der Daten aus Schritt B) automatisiert mit einem Rechenprogramm auf einer Recheneinheit (9) zur Ermittlung anfallender Einzel- und/oder Gesamtkosten, insbesondere pro Zeiteinheit und/oder pro Volumeneinheit des laufenden momentanen Betriebs der Anlage, eines in der Vergangenheit liegenden Betriebs der Anlage oder des simulierten Betriebs der Anlage; und
D) Ausgabe (8) der anfallenden Einzel- und/oder Gesamtkosten aus Schritt C), insbesondere pro Zeiteinheit und/oder pro Volumeneinheit, des laufenden momentanen Betriebs der Anlage, eines in der Vergangenheit liegenden Betriebs der Anlage oder des simulierten Betriebs der Anlage.

2. Verfahren nach Anspruch 1, **dadurch gekennzeichnet, dass** die Schritte B), C) und D) zur Simulation des zukünftigen Betriebs während eines laufenden Betriebs der Anlage durchgeführt werden, um während des laufenden Betriebs eine Auswirkung von Datenänderungen in den Schritten A) und/oder B) zu simulieren.

3. Verfahren nach Anspruch 1 oder 2, **dadurch gekennzeichnet, dass** Schritt B) ein Eingeben von Daten wenigstens eines oder mehrerer vorzugsweise gegenüber einem aktuellen Betrieb geänderten Verbrauchswerts/Verbrauchswerte und/oder einer oder mehreren geänderten Entsorgungsmenge(n) umfasst und dass die Parameterbilanzierung gemäß Schritt C) eine Kostenbilanzierung unter Einbeziehen des geänderten Verbrauchs oder der geänderten Verbräuche (2) und/oder der geänderten Entsorgungsmenge(n) (3) während des simulierten Betriebs umfasst.

4. Verfahren nach einem der vorstehenden Ansprüche, **dadurch gekennzeichnet, dass** die bereitgestellten Daten (1) gemäß Schritt A) folgende Kostendaten umfassen:
i) Kosten pro Masse- oder Volumeneinheit an ggf. zugesetzten Hilfsstoffen,
ii) Kosten pro Masse- oder Volumeneinheit an entstehenden Entsorgungskosten (Entsorgungsmenge/-produkt),
iii) Kosten pro Masse- oder Volumeneinheit an Lösungs- und/oder Verdünnungsmittel,
iv) Energiekosten pro Zeiteinheit und/oder pro Volumeneinheit, und/oder
v) Verschleißkosten pro Zeiteinheit und/oder pro Volumeneinheit.

5. Verfahren nach einem der vorstehenden Ansprüche, **dadurch gekennzeichnet, dass** das Ermitteln von Verbräuchen (2) und/oder Ermitteln von anfallenden Entsorgungsmengen (3) gemäß Schritt B folgende Daten umfasst:
i) Hilfsmittelverbrauch als Masse- oder Volumeneinheit in einem Zeitbereich bei der zentrifugalen Verarbeitung,
ii) Umfang des gebildeten und zu entsorgenden Abfallprodukts als Masse- oder Volumeneinheit in einem Zeitintervall,
iii) Energieverbrauch während der zentrifugalen Verarbeitung in einem Zeitintervall,
iv) Verbrauch an Lösungs- und/oder Verdünnungsmittel als Masse- oder Volumeneinheit in einem Zeitintervall, und/oder
v) Betriebsdauer der Anlage.

6. Verfahren nach einem der vorstehenden Ansprüche, **dadurch gekennzeichnet, dass** das Ermitteln von Verbräuchen (2) und/oder Ermitteln von anfallenden Entsorgungsmengen (3) gemäß Schritt B unter Einbeziehung einer Simulation mit dem Rechenprogramm auf der Recheneinheit anhand eines mathematisch-physikalischen Modells erfolgt.

7. Verfahren nach einem der vorhergehenden Ansprüche, **dadurch gekennzeichnet, dass** der Hilfsmittelverbrauch ein Verbrauch an Polymer zur Fällung von Feststoffen während der zentrifugalen Trennung ist.

8. Verfahren nach einem der vorhergehenden Ansprüche, **dadurch gekennzeichnet, dass** der Hilfsmittelverbrauch ein Verbrauch an Kalk während der zentrifugalen Trennung ist.

9. Verfahren nach einem der vorhergehenden Ansprüche, **dadurch gekennzeichnet, dass** das Ermitteln von Verbräuchen (2) und/oder Ermitteln von anfallenden Entsorgungsmengen (3) gemäß Schritt B durch messtechnische Erfassung (4) von Messwerten wie Energieverbrauch, Drehmoment, Durchflussstrom und/oder Dosierstrom pro Zeitintervall im Betrieb der Anlage erfolgt und anschließend eine Berechnung der Verbräuche und der Masse oder des Volumens an anfallenden Entsorgungsmengen erfolgt.

10. Verfahren nach einem der vorhergehenden Ansprüche, **dadurch gekennzeichnet, dass** die Anlage einen oder mehrere elektrische(n) Antrieb(e) aufweist, wobei in die Ermittlung der Energiekosten der Energieverbrauch des elektrischen Antriebs oder der elektrischen Antriebe einbezogen wird.

11. Verfahren nach einem der vorhergehenden Ansprüche, **dadurch gekennzeichnet, dass** eine Anzeige einer, vorzugsweise aller, der folgenden ermittelten und/oder gemessenen Daten erfolgt:
N1) Entsorgungskosten;
N2) Kosten für die eingesetzten Hilfsstoffe;
N3) Kosten für das eingesetzte Betriebswasser;
N4) Stromkosten und/oder
N5) weitere Betriebskosten (Personalkosten oder ähnliches; EURO)
N6) Gesamtkosten (EURO)

12. Verfahren nach Anspruch 11, **dadurch gekennzeichnet, dass** die Anlage eine Auswerteeinheit aufweist und dass für ermittelte Einzelbetriebskosten, umfassend die Entsorgungskosten, Kosten für das eingesetzte Hilfsstoffen, Kosten für das eingesetzte Betriebswasser und Stromkosten, in einer Datenbank Daten als Sollwerte für Einzelbetriebskosten hinterlegt sind und wobei die Auswerteeinheit die ermittelten Einzelbetriebskosten mit den Sollwerten abgleicht und bei Überschreiten eines Sollwerts eine Steuerung der Anlage derart erfolgt, dass die ermittelten Einzelbetriebskosten unterhalb der Sollwerts liegen.

13. Verfahren nach einem der vorhergehenden Ansprüche, **dadurch gekennzeichnet, dass** eine Anzeige der geänderten entstehenden Kosten erfolgt, sofern eine Änderung eines Produktzulaufes und/oder der Daten gemäß Schritt A) oder einer Drehzahl simuliert wird.

14. Verfahren nach einem der vorhergehenden Ansprüche, **dadurch gekennzeichnet, dass** die Gesamtkosten (N6) als die Summe der Kosten (N1, N2, N3, N4 und/oder N5) über die Zeit oder pro Zeiteinheit oder pro Volumeneinheit ermittelt wird.

15. Anlage zur Aufbereitung von Abwasser oder Klärschlamm im Zentrifugalfeld einer Zentrifuge, die eine Recheneinheit aufweist, die mit einem Programm zum Ausführen des Verfahrens nach einem der vorstehenden Ansprüche versehen ist.
